# EUROPEAN PATENT SPECIFICATION

(11) **EP 4 378 713 B1**
(45) Date of publication and mention of the grant of the patent: **09.12.2026**
(21) Application number: 23212731.6
(22) Date of filing: 28.11.2023
(51) Int. Cl.: B60C 1/00, C08K 3/04, C08K 3/34, C08K 3/36

(54) **A LOW ROLLING RESISTANCE RUBBER COMPOSITION**
KAUTSCHUKZUSAMMENSETZUNG MIT NIEDRIGEM ROLLWIDERSTAND
COMPOSITION DE CAOUTCHOUC À FAIBLE RÉSISTANCE AU ROULEMENT

(30) Priority: 29.11.2022 LU 503118
(43) Date of publication of application: 05.06.2024
(73) Proprietor: Apollo Tyres Global R&D B.V., 7521 PT Enschede (NL)
(72) Inventor: MONDAL, Anup, 7521 PT Enschede (NL); THARIK, Mohamed, 7521 PT Enschede (NL); PRIVITERA, Davide, 7521 PT Enschede (NL)
(74) Representative: Michalski Hüttermann & Partner mbB

(56) References cited:
- EP-A1- 3 868 569
- CN-A- 104 650 469
- CN-A- 114 921 002
- DE-A1- 102019 209 830
- US-B2- 11 492 463

## Description

The present invention relates to a cross-linkable rubber composition, a cross-linked rubber composition obtained by cross-linking such a rubber composition, a method of preparing a tyre and a tyre.

Tread rubber is one of the important portions of a pneumatic tyre which contributes enormously to the overall performance of a tyre. A tyre has to perform well in severe weather conditions and it has to exhibit a variety of performances such as wet grip and low rolling resistance.

A tread compound can be optimized to exhibit a good performance by using different kinds of polymers or fillers, but usually increasing one performance leads to a decrease in another performance. For example, it is known that reducing the amount of filler in the rubber compound would typically improve the hysteresis property (rolling resistance) but compromise the mechanical property or durability.

CN 113603949 A discloses automobile tires, in particular a low-rolling-resistance tread formula, and provides the following scheme aiming at the problems that an existing low-rolling-resistance tread is poor in performance in all aspects, waste tires cannot be recycled, resources are wasted, and sustainable development cannot be met. The formula comprises the following important components: waste tire, carbon black, natural rubber, silica gel, a plasticizer, a vulcanizing agent, a silane coupling agent, an anti-aging agent, an antioxidant, a flexibilizer, a catalyst, a defoaming agent, environment-friendly oil and wear-resistant and pressure-resistant components, wherein the wear-resistant and pressure-resistant components comprise polyvinyl chloride, silicon carbide, ferroboron and silicon-calcium-barium.

EP 3907255 A1 discloses a rubber composition for tire tread having an improved balanced performance of abrasion resistance and chipping resistance, a tire tread composed of the rubber composition, and a tire comprising the tire tread. The rubber composition for tire tread comprises a diene-based rubber component comprising a styrene-butadiene rubber and an isoprene-based rubber, a filler comprising carbon black, an aromatic ring-containing resin, and a polyhydric alcohol.

US 10711120 B2 discloses a vulcanizable rubber composition comprising (A) 100 parts by weight of elastomer consisting of 70 to 100 parts by weight, er 100 parts by weight of the elastomer (phr), of an isoprene-butadiene rubber having a Tg ranging from -100° C to -50° C, and 0 to 30 phr of a second elastomer selected from the group consisting of isoprene-butadiene rubber having a Tg ranging from -49 to -20° C, natural rubber, synthetic polyisoprene, and polybutadiene, (B) from 30 to 80 phr of a resin having a Tg of at least 20° C, (C) from 0 to 4 phr of an oil, and (D) from 80 to 180 of a filler selected from the group consisting of carbon black and silica.

US 20020103282 A1 discloses a silica-containing curable-rubber compound for producing tire tread plies, in particular for passenger car tires. The compound comprises at least one cross-linkable unsaturated-chain polymer base; a reinforcing filler comprising carbon black and silica; an inorganic salt, the cationic part of which is selected from the group comprising Na⁺, Li⁺, Mg⁺⁺ and K⁺ or combinations thereof, and the anionic part of which is selected from the group comprising Cl⁻, SO4⁻, CO₃⁻ and PO₄⁻ or combinations thereof; and where the compound contains a reinforcing filler-salt quantity, of which over 48% by weight is defined by a carbon black-salt quantity, and at least 30% by weight is defined by carbon black.

WO 2020247672 A1 discloses a tire tread and a tire, more particularly, a tire having a tread or other elastomeric component within enhanced composite material properties, including, but not limited to, modulus ratio, percent elongation at break, and/or tan delta, wherein the tire, tread or other elastomeric component comprise composites characterized by well dispersed reinforcing filler, which can be indicated by macrodispersion.

EP 3868569 A1, DE 102019209830 A1 and CN 114921002 A describe rubber compositions for tyre treads. US 11492463 B2 describes a rubber composition for a tennis ball. CN 104650469 A describes a high-temperature-resistant flame-retardant conveying belt.

Optimizing the tread compound for rolling resistance normally results in trade-off in mechanical properties. The present invention has the object to at least partially overcome the drawbacks and in particular to provide a composition for a tyre tread which has improved rolling resistance, without compromising on the mechanical properties.

This object is achieved by a cross-linkable rubber composition according to claim 1, a cross-linked rubber composition according to claim 4, a method according to claim 9 and a tyre according to claim 10. Advantageous embodiments are the subject of dependent claims. They may be combined freely unless the context clearly indicates otherwise.

Hence, a cross-linkable rubber composition is provided, the cross-linkable rubber composition comprising, per hundred parts by weight of rubber (phr):
100 phr of a rubber component comprising a natural rubber or an isoprene rubber or a combination thereof,
a white filler, and
a black filler;
wherein the white filler is a mixture of a first white filler and a second white filler, wherein the first white filler has a BET surface area of 170 m²/g to 180 m²/g measured according to ASTM D6738, and/or wherein the second white filler has a BET surface area of 5 m²/g to 10 m²/g measured according to ASTM D5604, wherein the first white filler is selected from silica and the second white filler is a kaolin clay, and wherein the composition comprises silica in a range of from 5 phr to 10 phr and kaolin clay in a range of from 3 phr to 7 phr, and wherein
the black filler is a mixture of a first black filler and a second black filler, wherein the first and second black filler each are a carbon black, and wherein the first carbon black has a BET surface area of 90 m²/g to 95 m²/g measured according to ASTM D6556 and the second carbon black has a BET surface area of 65 m²/g to 75 m²/g measured according to ASTM D6556, and wherein the first carbon black is present in an amount in a range of from 30 phr to 40 phr, and the second carbon black is present in an amount in a range of from 5 phr to 10 phr.

It has surprisingly been found that such a rubber composition provides improvement in the rolling resistance and durability while still maintaining the mechanical properties. The composition can perform well for an all season tread with a balanced property of rolling resistance and mechanical properties.

It will be understood that in formulations discussed in connection with the present invention the phr amount of all rubber components adds up to 100. Furthermore, to differentiate between the two different white fillers, terms like first white filler and second white filler are used. In embodiments where two different black fillers are present, the terms first black filler and second black filler are used likewise to differentiate between the respective fillers.

The first white filler has a BET surface area of 170 to 180 m²/g measured according to ASTM D6738 and/or the second white filler has a BET surface area of 5 to 10 m²/g measured according to ASTM D5604.

The first white filler is selected from silica and the second white filler is a kaolin clay. In embodiments, the silica is selected from a group consisting of highly dispersible silicas (HDS) or semi HDS. White filler which meets a BET surface area of 170 to 180 m²/g (according to ASTM D6738) includes highly dispersible silica (HDS) and semi HDS. Highly dispersible silica may be precipitated from a silicate solution, for example, by hydrolysis and/or high temperature oxidation conversion. An example of a commercial silica is Ultrasil^{®} VN3 (Evonik Industries AG).

White filler which meets a BET surface area of 5 to 10 m²/g (according to ASTM D5604) includes kaolin clay. The term "kaolin clay" is also referred to as "kaolin" or "china clay" in the rubber industry. Kaolin clay contains predominantly the mineral kaolinite, hydrous aluminum silicate. In embodiments, kaolin clay is selected from hydrous kaolin, calcined kaolin, and combinations thereof. Calcined kaolin refers to anhydrous aluminum silicate produced by heating natural kaolin.

The black filler is a mixture of a first black filler and a second black filler wherein the first and second black filler each are a carbon black. The first carbon black has a BET surface area of 90 m²/g to 95 m²/g measured according to ASTM D6556 and the second carbon black has a BET surface area of 65 m²/g to 75 m²/g measured according to ASTM D6556. An example of a commercial carbon black having a BET surface area of 90 m²/g to 95 m²/g (according to ASTM D6556) is N-339 (HAF-HS) (Birla Carbon). An example of a commercial carbon black having a BET surface area of 65 m²/g to 75 m²/g (according to ASTM D6556) is N550 Recycled Carbon Black (Tyre Recycling In Sweden AB).

It has particularly been found that a rubber composition with four fillers, where first and second white fillers are a silica and a kaolin clay, respectively, and first and second carbon black, provides improvement in the rolling resistance and durability while maintaining the mechanical properties.

In embodiments, the composition comprises a first white filler and a second white filler, wherein the first white filler has a BET surface area of 170 m²/g to 180 m²/g (according to ASTM D6738) and/or the second white filler has a BET surface area of 5 m²/g to 10 m²/g (according to ASTM D5604), wherein the first white filler preferably is a silica and the second white filler preferably is kaolin clay, in a range of from 8 phr to 17 phr. The composition comprises silica in a range of from 5 phr to 10 phr. The composition comprises kaolin clay in a range of from 3 phr to 7 phr.

In embodiments, the composition comprises carbon black, preferably a mixture of a first carbon black and a second carbon black, in a range of from 35 phr to 50 phr. The composition comprises the first carbon black having a BET surface area of 90 m²/g to 95 m²/g (measured according to ASTM D6556) in an amount in a range of from 30 phr to 40 phr and the second carbon black having a BET surface area of 65 m²/g to 75 m²/g (measured according to ASTM D6556) in an amount in a range of from 5 phr to 10 phr.

In another embodiment, the composition comprises a total amount of black and while filler in a range of from 40 phr to 70 phr, preferably in a range of from 50 to 70 phr.

In embodiments, the rubber component comprises a natural rubber or an isoprene rubber in an amount of from 80 phr to 100 phr, preferably in an amount of from 85 to 100 phr.

In a preferred embodiment, the rubber component comprises of from 0 phr to 20 phr, preferably of from 0 to 15 phr or of from 10 phr to 20 phr, of a further rubber selected from butadiene rubber or styrene butadiene rubber or a solution polymerized styrene butadiene rubber or a combination thereof.

The cross-linkable rubber compositions may be sulfur-vulcanizable and/or peroxide-vulcanizable. If desired, additives can be added. Examples of usual additives are stabilizers, antioxidants, lubricants, fillers, dyes, pigments, flame retardants, conductive fibres and reinforcing fibres.

Another aspect of the present invention relates to a cross-linked rubber composition that is obtained by cross-linking a rubber composition according to the invention.

In an embodiment the cross-linked rubber composition has an elongation at break at 160°C (measured by DMA as per ISO 4664-1) ranging from ≥ 320 to ≤ 360%.

In another embodiment the cross-linked rubber composition has a rebound value at 70°C (as per ISO 4662) ranging from ≥ 70 % to ≤ 80%.

In another embodiment the cross-linked rubber composition has a tan delta value at 70°C (as per DMA double shear -80°C to 25°C at 0.1%) ranging from ≥ 0.10 to ≤ 0.15. In another embodiment the cross-linked rubber composition has a tear strength (as per delft 20' at 160°C) ranging from ≥ 7 to ≤ 9 MPa.

The present invention also relates to a method of preparing a tyre, comprising the steps of:
- providing a tyre assembly comprising a rubber composition according to the invention;
- cross-linking at least the rubber composition according to the invention in the tyre assembly.

The present invention also encompasses a tyre comprising a tread base, wherein the tread base comprises a cross-linked rubber composition according to the invention.

The present invention will be further described with reference to the following examples without wishing to be limited by them.

### Methods:

Hardness Test: A hardness test was performed on a Zwick 3150 Shore A Hardness Tester according to DIN-53505 at 23°C. The hardness (in Shore A) for a test specimen was measured by making 5 determinations at different positions using a Durometer type A as described in the Hardness Shore A manual from Zwick. The determinations were at least 6.0 mm apart and at least 12 mm from any edge.

Tensile strength: Tensile strength analysis was performed for cured samples on a Zwick Z005 apparatus with a speed of 500 mm/min speed. Samples were cured at 160°C for 20 minutes and standard tensile specimens were cut from rubber sheet according to ISO 37 standard. Measuring tensile strength and force elongation properties via tensile method also determines modulus at various elongations i.e. 25%, 100%, 200% & 300% which indicates static stiffness.

Rebound: Rebound measurements were performed for cured samples on a Zwick/Roell 5109 Rebound Resilience Tester according to the standardized ISO4662 method at 23°C and 70°C.

Temperature sweep by DMA: Dynamic mechanical analysis (DMA) analysis was performed for cured samples by Metravib DMA+450 in double shear mode. DMA was performed by temperature sweep at constant frequency 10 Hz with 6 % strain in a temperature range of 25°C to 80°C. DMA was also performed by temperature sweep at constant frequency 10 Hz with 1 % strain in a temperature range of -80°C to 25°C.

Rubber compositions: In accordance with the preceding, cross-linkable rubber compositions were prepared according to the following tables 1, 3, 5 and 7. In a first step, the rubber components were added and mixed, followed by a second step wherein the fillers, oil and additives were added and mixed and a last step wherein the curing package was added. A composition denoted Ref is a comparative example and a composition denoted E is a composition according to the invention.

Amounts for the components are given in PHR. Unless stated otherwise, glass transition temperatures given were determined by DSC according to ISO 22768.

### Example 1

**Table 1: Composition of Examples:**

| | Ref. 1.0 | E.1.0 | E.1.1 | E.1.2 |
|---|---|---|---|---|
| NR TSR 20 | 100.00 | 100.00 | 100.00 | 100.00 |
| First Black Filler | 47.00 | 35.00 | 35.00 | 35.00 |
| First White Filler | 5.00 | 8.00 | 8.00 | 8.00 |
| Second White Filler | - | 5.00 | 5.00 | 5.00 |
| Second Black Filler | - | 8.00 | 8.00 | 8.00 |

| | | | | |
|---|---|---|---|---|
| Natural rubber (NR) was TSR 20, with a Mooney Viscosity 80 and a Tg of -70 °C. BR was a high cis (Minimum 96%) 1,4 polybutadine-Nd catalysed butadiene rubber, supplied by Arlanxeo (Buna CB 25). First Black Filler was N-339 (HAF-HS) Carbon black supplied by Birla Carbon. First White Filler was granular active silica supplied by Evonik (Ultrasil VN3). Second White Filler was China Clay supplied by Imerys. Second Black Filler was N550 Recycled Carbon Black supplied by Tyre Recycling In Sweden AB. | | | | |

Rebound at 70°C and Tan delta (70°C) were measured to check (relate) for rolling resistance (RR) of the compounds. The following table 2 shows the results obtained from the cured compositions.

**Table 2: Test results:**

| | | Ref 1.0 | E.1.0 | E.1.1 | E.1.2 |
|---|---|---|---|---|---|
| Hardness | °Sh A | 63.90 | 65.30 | 66.60 | 67.70 |
| Rebound (70°C) | [%] | 68.20 | 75.10 | 76.30 | 76.60 |
| Tan δ 70 °C (RR indicator) | | 0.20 | 0.13 | 0.10 | 0.10 |
| Elongation at break | % | 315.78 | 342.62 | 330.16 | 331.06 |
| Tensile strength 20' at 160°C | MPa | 17.03 | 24.00 | 24.13 | 23.45 |

The results show for the composition E1.0, E1.1 and E1.2, there is an increase in the hardness and an increase in rebound at 70°C. There is also a decrease in Tan delta at 70°C. Rebound testing at 70°C (ISO 4662) is believed to be an indicator for rolling resistance (RR). A higher rebound value at 70°C relates to a lower rolling resistance for a tyre whose tread comprises such a cured rubber. In a similar fashion, a lower tan δ at 70 °C is an indicator for improved rolling resistance.

Further it can be seen from the increase in the elongation at break, and tensile strength 20' at 160 °C that the durability had increased in the composition E1.0, E1.1 and E1.2.

### Example 2

**Table 3: Composition of Examples:**

| | Ref. 1.1 | Ref. 1.2 | E.1.0 |
|---|---|---|---|
| NR TSR 20 | 100.00 | 100 | 100.00 |
| First Black Filler | 40.00 | 43.00 | 35.00 |
| First White Filler | 8.00 | - | 8.00 |
| Second White Filler | - | 5.00 | 5.00 |
| Second Black Filler | 8.00 | 8.00 | 8.00 |

| | | | |
|---|---|---|---|
| Natural rubber (NR) was TSR 20, with a Mooney Viscosity 80 and a Tg of -70 °C. First Black Filler was N-339 (HAF-HS) Carbon black supplied by Birla Carbon. First White Filler was granular active silica supplied by Evonik (Ultrasil VN3). Second White Filler was China Clay supplied by Imerys. Second Black Filler was N550 Recycled Carbon Black supplied by Tyre Recycling In Sweden AB. | | | |

Rebound at 70°C and Tan delta (70°C) were measured to check (relate) for rolling resistance (RR) of the compounds. Payne effect was measured using a rubber process analyzer to evaluate rolling resistance (RR). The following table 4 shows the results obtained from the cured compositions.

**Table 4: Test results:**

| | | Ref. 1.1 | Ref. 1.2 | E.1.0 |
|---|---|---|---|---|
| Rebound (70°C) | [%] | 71.80 | 70.90 | 75.10 |
| Tan δ 70 °C (RR indicator) | | 0.18 | 0.25 | 0.13 |
| Elongation at break | % | 280.87 | 311.19 | 342.62 |

The results show for the compositions E1.0 in comparison to the reference composition having only three fillers that there is an increase in rebound at 70°C and there is also a decrease in Tan delta at 70°C. Rebound testing at 70°C (ISO 4662) is believed to be an indicator for rolling resistance (RR). A higher rebound value at 70°C relates to a lower rolling resistance for a tyre whose tread comprises such a cured rubber. In a similar fashion, a lower tan δ at 70 °C is an indicator for improved rolling resistance.

Further it can be seen from the increase in the elongation at break that the durability had increased in the composition E1.0 as compared to reference compositions with three fillers.

### Example 3

**Table 5: Composition of Examples:**

| | Ref. 1.4 | Ref 1.5 | E.1.0 |
|---|---|---|---|
| NR TSR 20 | 100.00 | 100.00 | 100.00 |
| First Black Filler | 43.00 | - | 35.00 |
| First White Filler | 8.00 | 8.00 | 8.00 |
| Second White Filler | 5.00 | 5.00 | 5.00 |
| Second Black Filler | - | 43.00 | 8.00 |

| | | | |
|---|---|---|---|
| Natural rubber (NR) was TSR 20, with a Mooney Viscosity 80 and a Tg of -70 °C. First Black Filler was N-339 (HAF-HS) Carbon black supplied by Birla Carbon. First White Filler was granular active silica supplied by Evonik (Ultrasil VN3). Second White Filler was China Clay supplied by Imerys. Second Black Filler was N550 Recycled Carbon Black supplied by Tyre Recycling In Sweden AB. | | | |

Rebound at 70°C and Tan delta (70°C) were measured to check (relate) for rolling resistance (RR) of the compounds. Payne effect was measured using a rubber process analyzer to evaluate rolling resistance (RR). The following table 6 shows the results obtained from the cured compositions.

**Table 6: Test results:**

| | | Ref.1.4 | Ref. 1.5 | E.1.0 |
|---|---|---|---|---|
| Hardness | °Sh A | 67.90 | 60.30 | 65.70 |
| Rebound (70°C) | [%] | 70 | 81.20 | 73 |
| Tan δ 70 °C (RR indicator) | | 0.16 | 0.06 | 0.14 |
| Tear strength (delft) 20' at 160°C | MPa | 10.89 | 5.17 | 11.38 |

The results show for the compositions Ref. 1.4 has better hardness as compared to composition E.1.0; however the tan δ at 70 °C and rebound at 70 °C are not good. Similarly Ref. 1.5 has better values for tan δ at 70 °C and rebound at 70 °C but the hardness and tear strength values are bad. Therefore it can be seen that a combination of two white fillers along with a combination of two black fillers does provide a composition having better mechanical properties along with better rolling resistance.

### Example 4

**Table 7: Composition of Examples:**

| | Ref. 1.0 | E.1.0 | E.2.0 | E.2.1 | E.2.2 | E.2.3 |
|---|---|---|---|---|---|---|
| NR TSR 20 | 100.00 | 100.00 | 90.00 | 80.00 | 90.00 | 80.00 |
| BR | - | - | 10.00 | 20.00 | - | - |
| SSBR | - | - | - | - | 10.00 | 20.00 |
| First Black Filler | 47.00 | 35.00 | 35.00 | 35.00 | 35.00 | 35.00 |
| First White Filler | 5.00 | 8.00 | 8.00 | 8.00 | 8.00 | 8.00 |
| Second White Filler | - | 5.00 | 5.00 | 5.00 | 5.00 | 5.00 |
| Second Black Filler | - | 8.00 | 8.00 | 8.00 | 8.00 | 8.00 |

| | | | | | | |
|---|---|---|---|---|---|---|
| Natural rubber (NR) was TSR 20, with a Mooney Viscosity 80 and a Tg of -70 °C. BR was a high cis (Minimum 96%) 1,4 polybutadine-Nd catalysed butadiene rubber, supplied by Arlanxeo (Buna CB 25). SSBR was tin coupled, chemically modified solution styrene butadiene rubber with 21% styrene, 50%vinyl, supplied by Trinseo (SLR-4601). First Black Filler was N-339 (HAF-HS) Carbon black supplied by Birla Carbon. First White Filler was granular active silica supplied by Evonik (Ultrasil VN3). Second White Filler was China Clay supplied by Imerys. Second Black Filler was N550 Recycled Carbon Black supplied by Tyre Recycling In Sweden AB. | | | | | | |

Rebound at 70°C and Tan delta (70°C) were measured to check (relate) for rolling resistance (RR) of the compounds. Payne effect was measured using a rubber process analyzer to evaluate rolling resistance (RR). The following table 8 shows the results obtained from the cured compositions.

**Table 8: Test results:**

| | | Ref. 1.0 | E.1.0 | E.2.0 | E.2.1 | E.2.2 | E.2.3 |
|---|---|---|---|---|---|---|---|
| Hardness | °Sh A | 63.90 | 65.30 | 65.00 | 67.50 | 65.60 | 66.20 |
| Rebound (70°C) | [%] | 68.20 | 75.10 | 76.60 | 76.30 | 75.40 | 74.50 |
| Tan δ 70 °C (RR indicator) | | 0.20 | 0.13 | 0.11 | 0.09 | 0.12 | 0.12 |
| Tear strength (delft) 20' at 160°C | MPa | 11.83 | 8.89 | 7.41 | 6.70 | 8.44 | 6.25 |

The results show for the compositions E1.0, E2.0, E2.1, E2.2 and E2.3, there is an increase in the hardness and an increase in rebound at 70°C. There is also a decrease in Tan delta at 70°C. Rebound testing at 70°C (ISO 4662) is believed to be an indicator for rolling resistance (RR). A higher rebound value at 70°C relates to a lower rolling resistance for a tyre whose tread comprises such a cured rubber. In a similar fashion, a lower tan δ at 70 °C is an indicator for improved rolling resistance.

Further it can be seen from the decrease in the tear strength (delft) 20' at 160 °C for the compositions E1.0, E2.0, E2.1, E2.2 and E2.3 that the durability had increased.

In summary, this shows a surprising improvement of the rolling resistance indicators and durability while maintaining the mechanical properties. Without being bound to a specific theory, it is believed that the combination of two different white fillers led to this change, pronounced by including two different black fillers. These results illustrate an improvement in the rolling resistance an durability without any change in the mechanical properties of the tyres due to the rubber composition of the invention.

## Claims

1. A cross-linkable rubber composition, the cross-linkable rubber composition comprising, per hundred parts by weight of rubber (phr):
100 phr of a rubber component comprising a natural rubber or an isoprene rubber or a combination thereof,
a white filler, and
a black filler;
**characterized in that**
the white filler is a mixture of a first white filler and a second white filler, wherein the first white filler has a BET surface area of 170 m²/g to 180 m²/g measured according to ASTM D6738 and/or the second white filler has a BET surface area of 5 m²/g to 10 m²/g measured according to ASTM D5604, wherein the first white filler is selected from silica and the second white filler is a kaolin clay, and wherein the composition comprises silica in a range of from 5 phr to 10 phr and kaolin clay in a range of from 3 phr to 7 phr, and wherein
the black filler is a mixture of a first black filler and a second black filler, wherein the first and second black filler each are a carbon black, and wherein the first carbon black has a BET surface area of 90 m²/g to 95 m²/g measured according to ASTM D6556 and the second carbon black has a BET surface area of 65 m²/g to 75 m²/g measured according to ASTM D6556, and wherein the first carbon black is present in an amount in a range of from 30 phr to 40 phr, and the second carbon black is present in an amount in a range of from 5 phr to 10 phr.

2. The rubber composition according to claim 1, wherein the rubber component comprises a natural rubber or an isoprene rubber in an amount of from 80 phr to 100 phr, preferably in an amount of from 85 phr to 100 phr.

3. The rubber composition according to claim 1 or 2, wherein the rubber component comprises of from 0 phr to 20 phr, preferably of from 0 phr to 15 phr, of a further rubber selected from butadiene rubber or styrene butadiene rubber or a solution polymerized styrene butadiene rubber or a combination thereof.

4. A cross-linked rubber composition, **characterized in that** it is obtained by cross-linking a rubber composition according to one of claims 1 to 3.

5. The cross-linked rubber composition according to claim 4 with an elongation at break at 160°C, measured by DMA as per ISO 4664-1, ranging from ≥ 320 % to ≤ 360%.

6. The cross-linked rubber composition according to any one of claims 4 or 5 with a rebound value at 70°C, measured per ISO 4662, ranging from ≥ 70 % to ≤ 80 %.

7. The cross-linked rubber composition according to any one of claims 4 to 6 with a tan delta value at 70°C, measured per DMA double shear -80°C to 25°C at 0.1%, ranging from ≥ 0.10 to ≤ 0.15.

8. The cross-linked rubber composition according to any one of claims 4 to 7 with a tear strength, measured per delft 20' at 160°C, ranging from ≥ 7 to ≤ 9 MPa.

9. A method of preparing a tyre, comprising the steps of:
- providing a tyre assembly comprising a cross-linkable rubber composition according to one of claims 1 to 3; and
- cross-linking at least the cross-linkable rubber composition according to one of claims 1 to 3 in the tyre assembly.

10. A tyre comprising a tread base, **characterized in that** the tread base comprises a cross-linked rubber composition according to any one of claims 4 to 8.

## Patentansprüche

1. Vernetzbare Kautschukzusammensetzung, wobei die vernetzbare Kautschukzusammensetzung pro hundert Gewichtsteile Kautschuk (phr) umfasst:
100 phr einer Kautschukkomponente umfassend einen Naturkautschuk oder einen Isoprenkautschuk oder eine Kombination davon,
einen weißen Füllstoff, und
einen schwarzen Füllstoff;
**dadurch gekennzeichnet, dass**
der weiße Füllstoff eine Mischung aus einem ersten weißen Füllstoff und einem zweiten weißen Füllstoff ist, wobei der erste weiße Füllstoff eine BET-Oberfläche von 170 m²/g bis 180 m²/g bestimmt gemäß ASTM D6738 aufweist und/oder der zweite weiße Füllstoff eine BET-Oberfläche von 5 m²/g bis 10 m²/g bestimmt gemäß ASTM D5604 aufweist, wobei der erste weiße Füllstoff ausgewählt ist aus Kieselsäure und der zweite weiße Füllstoff ein Kaolin ist, und wobei die Zusammensetzung Kieselsäure in einem Bereich von 5 phr bis 10 phr und Kaolin in einem Bereich von 3 phr bis 7 phr umfasst, und wobei
der schwarze Füllstoff eine Mischung aus einem ersten und einem zweiten schwarzen Füllstoff ist, wobei der erste und der zweite schwarze Füllstoff jeweils ein Ruß ist, und wobei der erste Ruß eine BET-Oberfläche von 90 m²/g bis 95 m²/g bestimmt gemäß ASTM D6556 aufweist und der zweite Ruß eine BET-Oberfläche von 65 m²/g bis 75 m²/g bestimmt gemäß ASTM D6556 aufweist, und wobei der erste Ruß in einer Menge im Bereich von 30 phr bis 40 phr enthalten ist, und der zweite Ruß in einer Menge im Bereich von 5 phr bis 10 phr enthalten ist.

2. Kautschukzusammensetzung nach Anspruch 1, wobei die Kautschukkomponente einen Naturkautschuk oder einen Isoprenkautschuk in einer Menge von 80 phr bis 100 phr, bevorzugt in einer Menge von 85 phr bis 100 phr, umfasst.

3. Kautschukzusammensetzung nach Anspruch 1 oder 2, wobei die Kautschukkomponente von 0 phr bis 20 phr, bevorzugt von 0 phr bis 15 phr, eines weiteren Kautschuks ausgewählt aus Butadienkautschuk oder Styrol-Butadien-Kautschuk oder einem lösungspolymerisiertem Styrol-Butadien-Kautschuk oder einer Kombination davon, umfasst.

4. Vernetzte Kautschukzusammensetzung, **dadurch gekennzeichnet, dass** sie durch Vernetzen einer Kautschukzusammensetzung nach einem der Ansprüche 1 bis 3 erhalten wird.

5. Vernetzte Kautschukzusammensetzung nach Anspruch 4 mit einer Bruchdehnung bei 160°C, gemessen durch dynamisch-mechanische Analyse (DMA) gemäß ISO 4664-1, im Bereich von ≥ 320 % bis ≤ 360 %.

6. Vernetzte Kautschukzusammensetzung nach einem der Ansprüche 4 oder 5 mit einem Rückprallwert bei 70°C, bestimmt gemäß ISO 4662, im Bereich von ≥ 70 % bis ≤ 80 %.

7. Vernetzte Kautschukzusammensetzung nach einem der Ansprüche 4 bis 6 mit einem tan delta-Wert bei 70°C, bestimmt gemäß DMA Doppelscherung -80°C bis 25°C bei 0,1%, im Bereich von ≥ 0,10 bis ≤ 0,15.

8. Vernetzte Kautschukzusammensetzung nach einem der Ansprüche 4 bis 7 mit einer Reißfestigkeit, bestimmt nach delft 20' bei 160°C, im Bereich von ≥ 7 bis ≤ 9 MPa.

9. Verfahren zur Herstellung eines Reifens, das die folgenden Schritte umfasst:
- Bereitstellen einer Reifenanordnung, die eine vernetzbare Kautschukzusammensetzung nach einem der Ansprüche 1 bis 3 umfasst; und
- Vernetzen mindestens der vernetzbaren Kautschukzusammensetzung nach einem der Ansprüche 1 bis 3 in der Reifenanordnung.

10. Reifen umfassend eine Reifenlaufflächenbasis, **dadurch gekennzeichnet, dass** die Reifenlaufflächenbasis eine vernetzte Kautschukzusammensetzung nach einem der Ansprüche 4 bis 8 umfasst.

## Revendications

1. Composition de caoutchouc réticulable, la composition de caoutchouc réticulable comprenant pour cent parties en poids de caoutchouc (phr) :
100 phr d'un composant caoutchouc comprenant un caoutchouc naturel ou un caoutchouc isoprène ou une combinaison de ceux-ci,
une charge blanche, et
une charge noire ;
**caractérisée en ce que**
la charge blanche est un mélange d'une première charge blanche et d'une seconde charge blanche, la première charge blanche ayant une surface spécifique BET de 170 m²/g à 180 m²/g mesurée selon la norme ASTM D6738 et/ou la seconde charge blanche ayant une surface spécifique BET de 5 m²/g à 10 m²/g mesurée selon la norme ASTM D5604, la première charge blanche étant choisie parmi la silice et la seconde charge blanche étant une argile kaolin, et la composition comprenant de la silice dans une plage allant de 5 phr à 10 phr et de l'argile kaolin dans une plage allant de 3 phr à 7 phr, et dans laquelle
la charge noire est un mélange d'une première charge noire et d'une deuxième charge noire, la première et la deuxième charge noire étant chacune un noir de carbone, et le premier noir de carbone ayant une surface spécifique BET de 90 m²/g à 95 m²/g mesurée selon la norme ASTM D6556 et le deuxième noir de carbone ayant une surface spécifique BET de 65 m²/g à 75 m²/g mesurée selon la norme ASTM D6556, et le premier noir de carbone étant présent en une quantité dans une plage allant de 30 phr à 40 phr, et le deuxième noir de carbone étant présent en une quantité dans une plage allant de 5 phr à 10 phr.

2. Composition de caoutchouc selon la revendication 1, dans laquelle le composant caoutchouc comprend un caoutchouc naturel ou un caoutchouc isoprène en une quantité de 80 phr à 100 phr, de préférence en une quantité de 85 phr à 100 phr.

3. Composition de caoutchouc selon la revendication 1 ou 2, dans laquelle le composant caoutchouc comprend de 0 phr à 20 phr, de préférence de 0 phr à 15 phr, d'un autre caoutchouc choisi parmi un caoutchouc butadiène ou un caoutchouc styrène butadiène ou un caoutchouc styrène butadiène polymérisé en solution ou une combinaison de ceux-ci.

4. Composition de caoutchouc réticulée, **caractérisée en ce qu'**elle est obtenue par réticulation d'une composition de caoutchouc selon l'une des revendications 1 à 3.

5. Composition de caoutchouc réticulée selon la revendication 4, présentant un allongement à la rupture à 160 °C, mesuré par DMA selon la norme ISO 4664-1, dans la plage de ≥ 320 % à ≤ 360 %.

6. Composition de caoutchouc réticulée selon l'une quelconque des revendications 4 ou 5, ayant une valeur de rebond à 70 °C, mesurée selon la norme ISO 4662, dans la plage de ≥ 70 % à ≤ 80 %.

7. Composition de caoutchouc réticulée selon l'une quelconque des revendications 4 à 6, ayant une valeur tan delta à 70 °C, mesurée par double cisaillement DMA de - 80 °C à 25 °C à 0,1 %, allant de ≥ 0,10 à ≤ 0,15.

8. Composition de caoutchouc réticulée selon l'une quelconque des revendications 4 à 7, ayant une résistance à la déchirure, mesurée par delft 20' à 160 °C, dans la plage de ≥ 7 à ≤ 9 MPa.

9. Procédé de préparation d'un pneu, comprenant les étapes de :
- fourniture d'un ensemble de pneu comprenant une composition de caoutchouc réticulable selon l'une des revendications 1 à 3 ; et
- réticulation d'au moins la composition de caoutchouc réticulable selon l'une des revendications 1 à 3 dans l'ensemble de pneu.

10. Pneu comprenant une base de bande de roulement, **caractérisé en ce que** la base de bande de roulement comprend une composition de caoutchouc réticulé selon l'une quelconque des revendications 4 à 8.
